# FASCICULE DE BREVET EUROPEEN

(11) **EP 1 813 478 B1**
(45) Date de publication et mention de la délivrance du brevet: **18.11.2009**
(21) Numéro de dépôt: 07290070.7
(22) Date de dépôt: 19.01.2007
(51) Int. Cl.: B60R 11/02

(54) **Dispositif formant support réglable**
Vorrichtung, die eine verstellbare Halterung bildet
Device forming an adjustable support

(30) Priorité: 27.01.2006 FR 0600792
(43) Date de publication de la demande: 01.08.2007
(73) Titulaire: Noremat, 54710 Ludres (FR)
(72) Inventeur: Eudes, Frédéric, Entrée C App. 309 54000 Nancy (FR)
(74) Mandataire: Laget, Jean-Loup

(56) Documents cités:
- WO-A-94/06234
- GB-A- 2 319 718

## Description

L'invention est relative à un support réglable de dispositif de commande.

L'invention est particulièrement utile pour fixer, de manière amovible, dans une cabine de tracteur agricole ou véhicule porteur équivalent, des dispositifs de commande d'une machine attelée à ce tracteur agricole ou véhicule porteur équivalent.

Les dispositifs connus de commande des machines attelées à un véhicule porteur ou à un tracteur agricole sont généralement reliés par un moyen filaire de transmission à la machine à commander.

Le moyen filaire de transmission peut être un câble mécanique de transmission d'effort, un câble électrique de transmission du signal, ou une conduite hydraulique de transmission de commande hydraulique.

Généralement, le dispositif connu de commande est fixé dans la cabine du tracteur agricole ou véhicule porteur, en étant enclenché dans ou sur un support fixé à demeure dans la cabine du tracteur ou véhicule porteur,

En raison du fait que les supports à fixer dans les cabines de tracteurs ou véhicule porteur diffèrent considérablement selon le type de machine, l'espace intérieur de la cabine du tracteur ou véhicule porteur est encombré par les supports qui restent fixés à l'intérieur de cette cabine.

Le document WO-9406234 décrit un dispositif formant support réglable de dispositif de commande, comportant au moins deux moyens amovibles de fixation à une paroi, deux bielles articulées formant compas.

Un premier but de l'invention est de proposer un nouveau support réglable de dispositif de commande ne nécessitant pas de fixation à demeure à l'intérieur d'une cabine de tracteur ou de véhicule porteur, et en particulier ne nécessitant pas d'intervention du genre perçage ou soudage, sur le tracteur ou véhicule porteur.

Un deuxième but de l'invention est de proposer un nouveau support réglable présentant une plage de réglage améliorée par rapport à l'art antérieur.

L'invention a pour objet un support réglable de dispositif de commande, comportant au moins deux moyens amovibles de fixation à une paroi, deux bielles articulées formant compas de sommet variable et un moyen de montage lié audit sommet pour monter ledit dispositif de commande.

Selon d'autres caractéristiques alternatives de l'invention:
- chaque moyen amovible de fixation comporte au moins une ventouse de fixation à une paroi.
- au moins une ventouse de fixation à une paroi comporte une fonction de ventouse pneumatique,
- au moins une ventouse de fixation à une paroi comporte une fonction de ventouse magnétique,
- chaque bielle comporte une ouverture oblongue permettant le déplacement du sommet du compas.
- un moyen de réglage est monté au sommet du compas.
- ledit moyen de réglage comporte une vis coopérant avec un taraudage du moyen de montage du dispositif de commande.
- le moyen de montage du dispositif de commande comporte une partie coudée.
- ladite partie coudée présente une conformation de canal en U.
- ladite conformation en U entoure l'extrémité distale d'une bielle, en étant guidée par celle-ci.

L'invention sera mieux comprise grâce à la description qui va suivre, en référence à la figure unique donnée à titre d'exemple non limitatif.
- La figure 1 représente schématiquement une vue de côté d'un dispositif selon l'invention.
- la figure 2 représente schématiquement une vue en perspective d'un deuxième dispositif selon l'invention.
- la figure 3 représente schématiquement une vue en perspective d'un troisième dispositif selon l'invention.

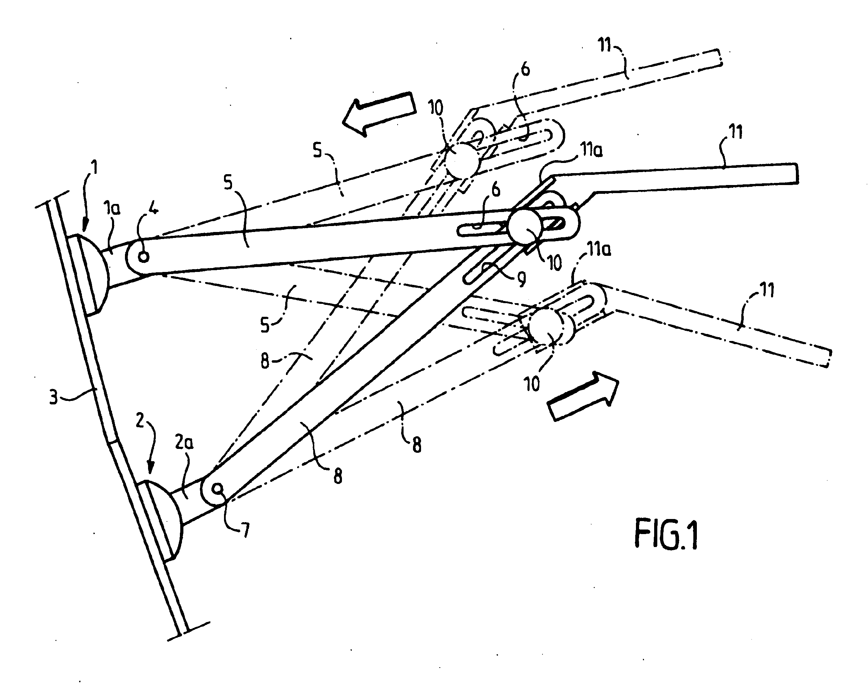

Sur la figure 1, un premier dispositif formant support réglable, comporte des moyens (1, 2) amovibles de fixation à la paroi (3) d'une cabine de tracteur ou véhicule porteur similaire.

Un moyen (1 ou 2) amovible de fixation comporte de préférence une ventouse de fixation à une paroi (3) de cabine.

La ventouse de fixation peut être une ventouse pneumatique dans le cas d'une paroi en verre, ou une ventouse magnétique dans le cas d'une paroi en métal, ou bien encore une ventouse mixte pneumatique et magnétique.

Sur le premier moyen (1) amovible de fixation est fixé un pied (1a) servant de support à un axe d'articulation (4). L'axe d'articulation (4) porte une bielle (5) montée, pivotante et comportant une lumière oblongue (6).

Sur le deuxième moyen (2) amovible de fixation est monté un pied (2a) portant un axe d'articulation (7).

L'axe d'articulation (7) permet le montage d'une deuxième bielle (8) munie d'une lumière oblongue (9).

Un moyen de réglage (10) de la position du compas formé par les bielles (5 et 8) permet de déplacer le sommet (10), selon la position souhaitée d'un moyen de montage (11) d'un dispositif non représenté de commande d'une machine destinée à être attelée à un tracteur agricole ou véhicule porteur similaire.

Le moyen de montage (11) peut être constitué par une fourchette de montage, une embase, une tige d'indexation, ou tout autre moyen de montage. Le moyen de montage (11) comporte de préférence une partie coudée (11a) présentant une forme de canal en U coulissant le long de l'extrémité distale de la deuxième bielle (8) lors du déplacement du bouton de réglage (10).

Le bouton de réglage (10) se prolonge de préférence par une vis de serrage coopérant avec un taraudage de l'extrémité coudée (11a) du moyen de montage (11).

Comme on le voit sur le dessin, la coopération des éléments du dispositif selon l'invention permet d'obtenir une plage de réglage angulaire importante à partir d'une position déterminée par le positionnement des ventouses (1 et 2) sur une paroi de cabine.

Des positions extrémales de débattement du dispositif sont représentées en traits pointillés de part et d'autre d'une position moyenne représentée en traits pleins.

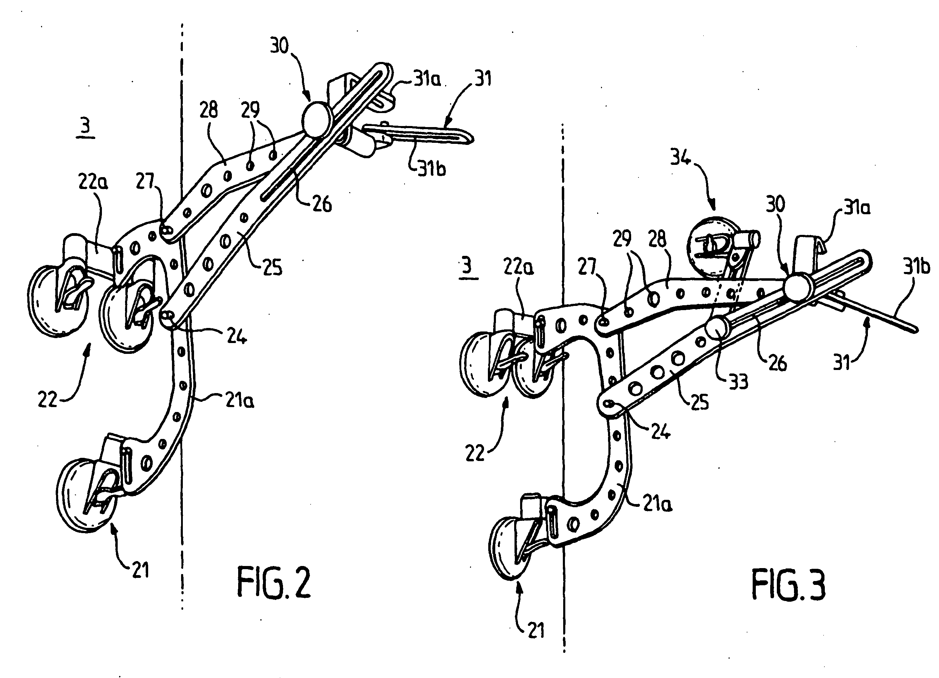

Sur la figure 2, un deuxième dispositif formant support réglable, comporte des moyens (21, 22) amovibles de fixation à la paroi (3) d'une cabine de tracteur ou véhicule porteur similaire.

Un moyen 21 ou 22 amovible de fixation comporte de préférence une ventouse de fixation à une paroi 3 de cabine.

Une ventouse de fixation peut être une ventouse pneumatique dans le cas d'une paroi non métallique ou une ventouse magnétique dans le cas d'une paroi métallique, ou bien encore une ventouse mixte pneumatique et magnétique.

Un portique (21a) est monté sur le premier moyen (21) amovible de fixation, en reliant ledit premier moyen (21) à un pont (22a) du deuxième moyen (22) amovible de fixation.

Le pont (22a) relie dans l'exemple représenté deux ventouses de fixation à la paroi (3).

Le portique (21a) sert de support à un premier axe (24) d'articulation. L'axe d'articulation (24) porte une bielle 25 montée pivotante et comportant une lumière oblongue (26).

Le portique (21a) sert de support à un deuxième axe (27) d'articulation. L'axe d'articulation (27) porte une deuxième bielle (28) munie d'une pluralité d'orifices (29) de réglage.

Un moyen (30) de réglage de la position du compas formé par les bielles (25 et 28) permet de déplacer le sommet (30) pour obtenir une position souhaitée d'un moyen (31) de montage d'un dispositif non représenté de commande d'une machine destinée à être attelée à un tracteur agricole ou véhicule porteur similaire.

Le moyen (31) de montage peut être constitué par une fourchette de montage, une embase, une tige d'indexation ou tout autre moyen de montage.

Le moyen (31) de montage comporte de préférence une partie coudée (31 a) présentant une lumière de montage et une partie (31 b) présentant une forme de canal en ⁻U⁻ permettant un réglage par coulissement.

Le bouton (30) de réglage se prolonge de préférence par une vis de serrage coopérant avec un écrou solidaire de la partie (31b) du moyen (31) de montage.

Comme on le voit sur le dessin, il est avantageux de prévoir une pluralité d'orifices de positionnement sur le portique (21a), pour régler de manière plus précise l'ouverture du compas formé par les bielles (25) et (28).

Sur la figure 3, les éléments identiques ou fonctionnellement équivalents aux éléments de la figure 2 sont repérés par des chiffres de référence identiques.

Ce troisième dispositif selon l'invention comporte les pièces du deuxième dispositif décrit en référence à la figure 2, et des éléments additionnels fixés de préférence à l'une ou l'autre bielle (25) ou (28).

Un bouton (33) de fixation dans une lumière (26) ou à travers un autre orifice assure le montage d'une tige (34) ou d'un organe portant une ventouse magnétique, pneumatique ou mixte.

La tige (34) ou organe porteur de ventouse est montée transversalement au plan défini par les bielles (25 et 28), de manière à rigidifier le dispositif selon l'invention, en assurant une fixation sur quatre points non coplanaires d'une cabine de tracteur ou véhicule porteur.

L'invention décrite en référence a un mode de réalisation particulier n'y est nullement limitée, mais couvre au contraire toute modification de forme et toute variante de réalisation dans le cadre de l'invention.

Ainsi, le compas à branches de longueur variable peut être agencé d'une autre manière, l'essentiel étant que la position de son sommet puisse être fixée par une commande pour faire varier à volonté l'emplacement du moyen de montage.

## Revendications

1. Dispositif formant support réglable de dispositif de commande, comportant au moins deux moyens (1, 2 ; 21, 22) amovibles de fixation à une paroi, deux bielles (5, 8 ; 25, 28) articulées formant compas de sommet (10, 30) variable et un moyen de montage (11, 31) lié audit sommet (10, 30) pour monter ledit dispositif de commande.

2. Dispositif selon la revendication 1, **caractérisé par le fait que** chaque moyen (1, 2 ; 21, 22) amovible de fixation comporte au moins une ventouse de fixation à une paroi.

3. Dispositif selon la revendication 2, **caractérisé par le fait qu'**au moins une ventouse de fixation à une paroi comporte une fonction de ventouse pneumatique.

4. Dispositif selon la revendication 2, **caractérisé par le fait qu'**au moins une ventouse de fixation à une paroi comporte une fonction de ventouse magnétique.

5. Dispositif selon la revendication 1 ou la revendication 2, **caractérisé par le fait qu'**au moins une bielle (5, 8, 25) comporte une ouverture oblongue (6, 7, 26) permettant le déplacement du sommet (10, 30) du compas.

6. Dispositif selon l'une quelconque des revendications précédentes, **caractérisé par le fait qu'**un moyen de réglage est monté au sommet (10, 30) du compas.

7. Dispositif selon la revendication 6, **caractérisé par le fait que** ledit moyen de réglage comporte une vis coopérant avec un taraudage du moyen (11, 31) de montage du dispositif de commande.

8. Dispositif selon la revendication 1 ou la revendication 7, **caractérisé par le fait que** le moyen (11, 31) de montage du dispositif de commande comporte une partie (11 a, 31 a) coudée.

9. Dispositif selon la revendication 8, **caractérisé par le fait que** ladite partie (11a) coudée présente une conformation de canal en U.

10. Dispositif selon la revendication 9, **caractérisé par le fait que** ladite conformation en U entoure l'extrémité distale d'une bielle (8), en étant guidée par celle-ci (8).

## Claims

1. Device which forms an adjustable support for a control device, comprising at least two detachable means (1, 2; 21, 22) for securing to a wall, two articulated connecting rods (5, 8; 25, 28) which form a variable top calliper (10, 30) and a fitting means (11, 31) which is connected to the said top (10, 30) in order to fit the said control device.

2. Device according to claim 1, **characterised in that** each detachable securing means (1, 2; 21, 22) comprises at least one suction cup for securing to a wall.

3. Device according to claim 2, **characterised in that** at least one suction cup for securing to a wall comprises a pneumatic suction cup function.

4. Device according to claim 2, **characterised in that** at least one suction cup for securing to a wall comprises a magnetic suction cup function.

5. Device according to claim 1 or claim 2, **characterised in that** at least one connecting rod (5, 8, 25) comprises an oblong aperture (6, 7, 26) which permits the displacement of the top (10, 30) of the calliper.

6. Device according to any one of the preceding claims,
**characterised in that** an adjustment means is fitted to the top (10, 30) of the calliper.

7. Device according to claim 6, **characterised in that** the said adjustment means comprises a screw which cooperates with an internal screw thread of the means (11, 31) for fitting the control device.

8. Device according to claim 1 or claim 7, **characterised in that** the means (11, 31) for fitting the control device comprises a bent part (11a, 31a).

9. Device according to claim 8, **characterised in that** the said bent part (11a) is in the form of a channel in the shape of a "U".

10. Device according to claim 9, **characterised in that** the said "U" shape surrounds the distal end of a connecting rod (8), whilst being guided by the latter (8) .

## Patentansprüche

1. Vorrichtung, die eine verstellbare Halterung für eine Steuereinrichtung ausbildet, mit mindestens zwei lösbaren Mitteln (1, 2; 21, 22) zum Befestigen an einer Wand, mit zwei verschwenkbaren Stangen, die einen Zirkel mit variablem Scheitel (10, 30) bilden, und mit einem Montagemittel (11, 31), das an diesem Scheitel (10, 30) angeschlossen ist, um die Steuereinrichtung zu montieren.

2. Vorrichtung nach Anspruch 1, **dadurch gekennzeichnet, daß** jedes lösbare Mittel (1, 2; 21, 22) zum Befestigen wenigstens einen Saugnapf zur Befestigung an einer Wand aufweist.

3. Vorrichtung nach Anspruch 2, **dadurch gekennzeichnet, daß** wenigstens ein Saugnapf zur Befestigung an einer Wand eine pneumatische Saugfunktion umfaßt.

4. Vorrichtung nach Anspruch 2, **dadurch gekennzeichnet, daß** wenigstens ein Saugnapf zur Befestigung an einer Wand eine Magnetgreifer-Funktion aufweist.

5. Vorrichtung nach Anspruch 1 oder Anspruch 2, **dadurch gekennzeichnet, daß** zumindest eine Stange (5, 8, 25) eine längliche Öffnung (6, 7, 26) aufweist, welche die Verlagerung des Scheitels (10, 30) des Zirkels zuläßt.

6. Vorrichtung nach einem der vorhergehenden Ansprüche, **dadurch gekennzeichnet, daß** ein Einstellmittel auf dem Scheitel (10, 30) des Zirkels montiert ist.

7. Vorrichtung nach Anspruch 6, **dadurch gekennzeichnet, daß** das Einstellmittel eine Schraube umfaßt, die mit einem Gewinde des Montagemittels (11, 31) für die Steuereinrichtung zusammenwirkt.

8. Vorrichtung nach Anspruch 1 oder Anspruch 7, **dadurch gekennzeichnet, daß** das Montagemittel (11, 31) für die Steuereinrichtung einen abgewinkelten Abschnitt (11 a, 31a) umfaßt.

9. Vorrichtung nach Anspruch 8, **dadurch gekennzeichnet, daß** der abgeWinkelte Abschnitt (11a) die Ausbildung eines U-förmigen Kanals darstellt.

10. Vorrichtung nach Anspruch 9, **dadurch gekennzeichnet, daß** die U-förmige Ausbildung das distale Ende eines Stabes (8) umgreift, wobei sie von diesem (8) gefi5hrt wird.
